# EUROPÄISCHE PATENTANMELDUNG

(11) **EP 0 572 692 A1**
(43) Veröffentlichungstag der Anmeldung: **08.12.1993**
(21) Anmeldenummer: 92109259.9
(22) Anmeldetag: 02.06.1992
(51) Int. Cl.: H01R 13/53, H02G 15/072, H02G 15/107

(54) **Steckerbuchse**

(71) Anmelder: KARL PFISTERER ELEKTROTECHNISCHE SPEZIALARTIKEL GMBH & CO. KG, D-70324 Stuttgart (DE)
(72) Erfinder: Bachmeier, Albert, Dipl.-Ing., W-7067 Plüderhausen (DE); Jacobs, Hans, W-7000 Stuttgart 1 (DE); Bäuerle, Gottfried, Dipl.-Ing., W-7012 Fellbach-Schmiden (DE); Sander, Dieter, Dipl.-Ing., W-7000 Stuttgart 75 (DE)
(74) Vertreter: Patentanwälte Bartels, Held und Partner

(57) **Zusammenfassung**

Bei einer Steckerbuchse für Hochspannungsenergieversorgungssysteme mit einer in einem Isolierkörper (1) festgelegten Kontaktbuchse, von der sich ein zu ihr konzentrisch angeordneter Kanal (6) durch den Isolierkörper (1) hindurch bis zu dessen einem Ende erstreckt, und mit einem im Isolierkörper (1) angeordneten Spannungssensor in Form einer Elektrode (16) ist diese kapazitiv an eine Hilfselektrode (14) angekoppelt, die durch die Kontaktbuchse (5) gebildet oder mit dieser galvanisch verbunden ist.

## Beschreibung

Die Erfindung betrifft eine Steckerbuchse für Hochspannungsenergieversorgungssysteme, welche die Merkmale des Oberbegriffs des Anspruches 1 aufweist.

Vor allem dann, wenn in einem Hochspannungsenergieversorgungssystem gekapselte Anlagenteile Verwendung finden, ist es vielfach nachträglich nicht möglich, Sensoren für die Spannungsüberwachung oder Spannungsmessung vorzusehen, da diese Sensoren innerhalb der gekapselten Anlagenteile untergebracht werden müssen. Sofern der Anschluß solcher Anlagenteile an das Leitungsnetz über Kabelstecker erfolgt, werden deshalb häufig diese Kabelstecker mit einem Spannungssensor ausgerüstet. Da jedoch eine Spannungsüberwachung oder Spannungsmessung auch dann erwünscht sein kann, wenn ein derartiger Kabelstecker nicht zur Verfügung steht, wurde bereits vorgeschlagen (DE 36 44 890 C2), die der Aufnahme eines Kabelsteckers dienende Steckbuchse mit einem Spannungssensor in Form einer Elektrode auszurüsten. Die Elektrode ist hierbei anstelle einer Gewindebuchse zur Aufnahme einer Schraube, mittels deren die Steckbuchse an der Kapselung befestigt wird, in den Isolierkörper der Steckbuchse eingebettet. Bei eingestecktem Kabelstecker ist die Elektrode dann kapazitiv an die im Kabelstecker liegende Leiterseele angekoppelt. Eine Spannungsüberwachung oder Spannungsmessung setzt deshalb voraus, daß in die Steckbuchse ein Kabelstecker eingesteckt ist.

Der Erfindung liegt die Aufgabe zugrunde, eine Steckbuchse der eingangs genannten Art hinsichtlich der Möglichkeiten der Spannungsüberwachung oder Spannungsmessung zu verbessern. Diese Aufgabe löst eine Steckbuchse mit den Merkmalen des Anspruches 1.

Dadurch, daß die Elektrode kapazitiv an eine Hilfselektrode angekoppelt ist, die durch die Steckbuchse gebildet oder mit dieser galvanisch verbunden ist, kann eine Spannungsüberwachung oder Spannungsmessung unabhängig davon durchgeführt werden, ob ein Kabelstecker oder ein Blindstecker in die Steckbuchse eingesetzt ist. Vor allem aber ist von Vorteil, daß das von der Elektrode gelieferte Signal unabhängig vom Querschnitt der im Kabelstecker liegenden Kabelseele ist. In die Steckerbuchse können nämlich in der Regel Kabelstecker für unterschiedlich große Kabelquerschnitte eingesetzt werden. Wenn der Kabelsensor an die im Kabelstecker liegende Kabelseele kapazitiv angekoppelt ist, wie dies bei den bekannten Steckbuchsen der Fall ist, ist die an der Elektrode abnehmbare Spannung bei Kabeln mit unterschiedlichem Querschnitt verschieden groß, selbst wenn die Spannung, die das Kabel führt, stets die gleiche Größe hat. Bei der erfindungsgemäßen Lösung wird das vom Sensor gelieferte Signal nicht vom Kabeldurchmesser verfälscht.

Bei einer bevorzugten Ausführungsform ist die Elektrode als Ringelektrode ausgebildet und konzentrisch zur Längsachse des Kanals angeordnet. Durch eine solche Ringelektrode kann die Strombelastbarkeit der Elektrode vergrößert werden.

Um die Elektrode nicht in dem die Kontaktbuchse enthaltenden Endabschnitt des Isolierkörpers anordnen zu müssen, was zu einer relativ langen Leitung innerhalb des Isolierkörpers für die Signalabnahme von der Elektrode führt, kann die Hilfselektrode einen konzentrisch zur Längsachse des Kanals angeordneten Ringkörper aufweisen, der im Bereich des an die Kontaktbuchse anschließenden Endabschnittes des Kanals in den Isolierkörper eingebettet und über einen elektrisch leitenden Träger an der Außenmantelfläche der Kontaktbuchse festgelegt ist. Eine solche Hilfselektrode ist vorzugsweise so ausgebildet, daß sie auch als Feldsteuerkörper dient. Der Träger kann dabei aus einzelnen Armen bestehen, die sich vom Ringkörper zu einer auf der Kontaktbuchse angeordneten Hülse erstrecken. Die Hilfselektrode beeinträchtigt dann den Gießvorgang beim Herstellen des Isolierkörpers nicht und wird beim Gießvorgang von der Kontaktbuchse in der richtigen Lage gehalten.

Bei einer Lage der Hilfselektrode im Bereich des an die Kontaktbuchse anschließenden Endes des Kanales im Isolierkörper kann die Elektrode etwa in der Mitte zwischen der Hilfselektrode und derjenigen Stirnfläche des Isolierkörpers liegen, in welcher die Mündungsöffnung des Kanales liegt. Die Elektrode ist dann ausreichend weit von den auf Erdpotential liegenden Teilen entfernt.

Bei einer bevorzugten Ausführungsform ist die Elektrode zumindest auf der der Hilfselektrode zugekehrten Seite mit einer Isolierung versehen, die einerseits an der Elektrode und andererseits an dem den Isolierkörper bildenden Material anliegt. Eine derartige Doppelisolation der Elektrode bringt erhebliche Vorteile mit sich. Vor allem braucht die Signalleitung, welche die Elektrode mit einem Überwachungs- oder Meßgerät verbindet, nicht mittels eines Überspannungsableiters abgesichert zu werden. Dadurch werden nicht nur Kosten eingespart. Ein Überspannungsleiter bringt auch die Nachteile mit sich, daß er bei einer zu hohen Strombelastung explodieren kann und daß darauf geachtet werden muß, daß bei einer Spannungsprüfung der Überspannungsableiter zuvor abgeklemmt und später wieder an die Verbindungsleitung angeschlossen werden muß. Da zweckmäßigerweise die Elektrode und ihre Isolierung als ein vorgefertigtes Bauteil ausgebildet werden, kann man außerdem die Isolierung der Elektrode unabhängig vom Isolierkörper prüfen, beispielsweise mit einer Spannung vom 1,5fachen Wert der Nennspannung. Die Isolierstrecke zwischen der Elektrode und der Hilfselektrode im Material des Isolierkörpers wird trotzdem so gewählt, daß der Isolierkörper der vollen Prüfspannung auch ohne die Isolierung der Elektrode standhält.

Im folgenden ist die Erfindung anhand eines in der Zeichnung dargestellten Ausführungsbeispiels im einzelnen erläutert. Es zeigen
- Fig. 1: eine Draufsicht auf das Ausführungsbeispiel mit eingesetztem Winkelstecker der Meßleitung,
- Fig. 2: einen Schnitt nach der Linie II - II der Fig.1 im montierten Zustand der Steckbuchse bei eingesetztem Kabelstecker,
- Fig. 3: einen Schnitt nach der Linie III - III der Fig.1 im montierten Zustand der Steckbuchse bei eingesetztem Kabelstecker.

Eine Steckbuchse der Innenkonusbauart für bekannte Kabelstecker, wie sie in Hochspannungsenergieversorgungssystemen bei Spannungen bis zu 60kV Verwendung finden, weist einen aus Gießharz bestehenden Isolierkörper 1 auf, der eine im wesentlichen zylindrische Form hat. Von einer zur Anlage an einer metallischen Wand 2, insbesondere einer Gerätegehäusewand, vorgesehenen Stirnfläche 3 verjüngt sich der Außendurchmesser des Isolierkörpers 1 über etwa die Hälfte von dessen axialer Länge geringfügig. Hieran schließt sich ein wesentlich stärker konischer Abschnitt an, der sich gegen die andere Stirnfläche 4 hin verjüngt.

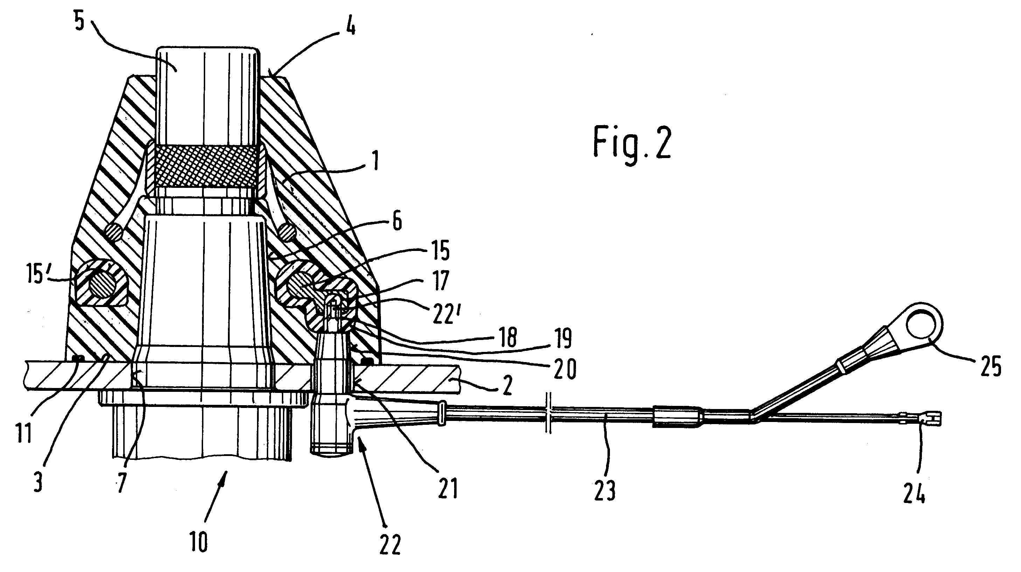

Wie die Fig.2 und 3 zeigen, ist in diesen letztgenannten Abschnitten eine zylindrische Kontaktbuchse 5 eingebettet, die über die Stirnfläche 4 übersteht und hier eine Anlagefläche für den Anschluß einer Stromschiene oder dergleichen bildet. An das zur anderen Stirnfläche 3 hin offene Ende der Kontaktbuchse 5 schließt sich gleichachsig ein zentraler Längskanal 6 des Isolierkörpers 1 an, der sich bis zur Stirnfläche 3 erstreckt und einen sich zur Stirnfläche 3 hin erweiternden Innenkonus bildet. Im montierten Zustand ist dieser zentrale Längskanal 6 auf eine Öffnung 7 in der Wand 2 ausgerichtet, deren Durchmesser an den größten Durchmesser des Längskanales 6 angepaßt ist.

Für die Verbindung des Isolierkörpers 1 mit der Wand 2 mittels nicht dargestellter, Bohrungen der Wand 2 durchdringender Schrauben sind in den Isolierkörper 1 drei um jeweils 120° gegeneinander versetzt angeordnete Gewindebuchsen 8 in den Isolierkörper eingebettet, deren offenes Ende bündig mit der Stirnfläche 3 abschließt. Drei zusätzliche Gewindebuchsen 9, die um jeweils 60° gegenüber den Gewindebuchsen 8 versetzt angeordnet und ebenfalls in den Isolierkörper 1 eingebettet sind, dienen der Aufnahme von Schrauben, mittels deren ein Kabelstecker 10 mit dem Isolierkörper 1 verbindbar ist. Eine außerhalb der Gewindebuchsen 8 und 9 umlaufende Rille in der Stirnfläche 3 enthält einen O-Ring 11, der für die erforderliche Abdichtung zwischen dem Isolierkörper 1 und der Wand 2 sorgt. Bei eingesetztem Kabelstecker 10 verschließt dessen Dichtungskörper 10', der an dem vom zentralen Längskanal 6 gebildeten Innenkonus vollflächig anliegt, den zentralen Längskanal 6 elektrisch dicht.

An der Außenmantelfläche der Kontaktbuchse 5 liegt mit ihr elektrisch leitend verbunden eine Hülse 12 an, die ebenfalls aus Metall bestehen könnte, im Ausführungsbeispiel aber aus halbleitendem Gießharz besteht. An diese Hülse 12 sind über ihren Umfang gleichmäßig verteilt Arme 13 angeformt, die sich gegen den zentralen Längskanal 6 und nach außen hin erstrecken. An diese Arme 13 ist eine ringförmige Hilfselektrode 14 angeformt, welche das sich an die Kontaktbuchse 8 anschließende Ende des zentralen Längskanales 6 im Abstand umgibt. Wegen der Leitfähigkeit der Hilfselektrode 14, der Arme 13 und der Hülse 12 führt die Hilfselektrode 14 stets die gleiche Spannung wie die Kontaktbuchse 5.

In einem Abstand von der Hilfselektrode 14, der deutlich kleiner ist als der Abstand von der Stirnfläche 3, ist in den Isolierkörper 1 eine Ringelektrode 15 eingebettet, die konzentrisch zur Längsachse des Isolierkörpers angeordnet und mit ihrer der Hilfselektrode 14 zugewandten, konvex gekrümmten Elektrodenfläche 15' auf die ihr zugewandte Elektrodenfläche 14' der Hilfselektrode 14 ausgerichtet ist.

Die Ringelektrode 15, die im Ausführungsbeispiel wie die Hilfselektrode 14 nicht aus Metall, sondern einem halbleitenden Gießharz besteht, ist von einer Isolierung 16 eingehüllt, die einerseits an der Ringelektrode 15 und andererseits an dem Material des Isolierkörpers 1 anliegt. Im Bereich der Elektrodenfläche 15' ist die Dicke der Isolierung 16, die aus Gießharz besteht, so gewählt, daß die Isolierung 16 einer Spannung standhält, die dem 1,5fachen Wert der Nennspannung entspricht. Auf der der Stirnfläche 3 zugewandten Seite der Elektrode 15 ist die Dicke der Isolierung 16 kleiner. Hier kann die Isolierung an den Gewindebuchsen 8 und 9 anliegen. Der Abstand der Isolierung 16 von der Elektrodenfläche 14' der Hilfselektrode 14 ist so gewählt, daß diese Isolierstrecke der vollen Prüfspannung standhält.

Da die Elektrode 15 und ihre Isolierung 16 ein vorgefertigtes Bauteil bilden, kann die Isolierung 16 vor der Einbettung in den Isolierkörper 1 geprüft werden.

In einen sich radial nach außen erstreckenden, kurzen Arm 17, der an die Ringelektrode 15 angeformt ist und mit dessen Hilfe die Ringeleketrode in der Gießform während des Gießens des Isolierkörpers 1 positioniert werden kann, ist, wie Fig.2 zeigt, eine Steckbuchse 18 auf einem Teil ihrer Länge eingebettet. Im übrigen ist diese Steckbuchse 18, die parallel zur Längsachse des Isolierkörpers 1 liegt und gegen dessen Stirnfläche 3 hin offen ist, in eine gegen letztere hin vorspringende Materialpartie 19 der Isolierung 16 eingebettet. An die offene Seite der Steckbuchse 18 schließt sich ein Kanal 20 an, der einen sich gegen die Stirnfläche 3 hin öffnenden Innenkonus bildet. Auf den Kanal 20 ist im montierten Zustand der Steckerbuchse eine im Durchmesser geringfügig größere Bohrung 21 der Wand 2 ausgerichtet, damit mittels eines Steckers 22, bei dem es sich im Ausführungsbeispiel um einen Winkelstecker handelt, eine Verbindung zu der Ringelektrode 15 hergestellt werden kann. Wenn der Kontaktstift 22' des Steckers 22 ausreichend tief in die Steckbuchse 18 eingesetzt ist, verschließt ein Dichtungskörper des Steckers 2 den Kanal 20 elektrisch dicht.

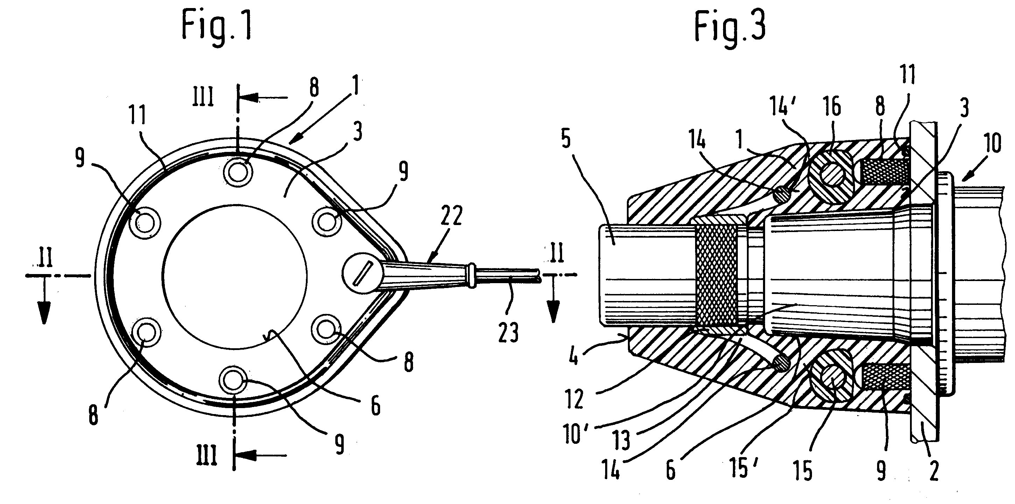

Wegen des Armes 17 und der Steckbuchse 18 ist, wie insbesondere Fig.1 zeigt, der Außendurchmesser des Isolierkörpers 1 in dem den Arm 17 und die Steckbuchse 18 enthaltenden Bereich größer als in dem übrigen Bereich, in dem der Isolierkörper 1 rotationssymmetrisch ist.

Der Stecker 22 ist am einen Ende einer Meßleitung 23 vorgesehen, deren anderes Ende eine Anschlußklemme 24 für die Seele der Meßleitung 23 und eine Anschlußklemme 25 für die diese Seele umgebende Abschirmung aufweist.

Die Ankopplung der Ringelektrode 15 an die Kontaktbuchse 5 über die Hilfselektrode 14 hat zur Folge, daß die an der Ringelektrode 15 anliegende Spannung nur von der Spannung, welche die Kontaktbuchse 5 führt, und nicht vom Querschnitt des Kabels abhängt, das im Inneren des in die Steckerbuchse eingesetzten Kabelsteckers 10 liegt. Außerdem ist eine Spannungsüberwachung oder Spannungsmessung auch möglich, wenn statt des Kabelsteckers 10 ein Blindstecker eingesetzt ist. Schließlich ist wegen des relativ großen Abstandes zwischen der Ringelektrode 15 und der Wand 2 die Erdkapazität relativ klein.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Steckerbuchse für Hochspannungsenergieversorgungssysteme mit einer in einem Isolierkörper festgelegten Kontaktbuchse, von der aus sich ein zu ihr konzentrisch angeordneter Kanal durch den Isolierkörper hindurch bis zu dessen einem Ende erstreckt, und mit einem im Isolierkörper angeordneten Spannungssensor in Form einer Elektrode, dadurch gekennzeichnet, daß die Elektrode (15) kapazitiv an eine Hilfselektrode (14) angekoppelt ist, die durch die Kontaktbuchse (5) gebildet oder mit dieser galvanisch verbunden ist.

2. Steckerbuchse nach Anspruch 1, dadurch gekennzeichnet, daß die Hilfselektrode (14) in den Isolierkörper (1) eingebettet ist.

3. Steckerbuchse nach Anspruch 1 oder 2, dadurch gekennzeichnet, daß die Elektrode (15) als Ringelektrode ausgebildet und konzentrisch zur Längsachse des Kanals (6) angeordnet ist.

4. Steckerbuchse nach einem der Ansprüche 1 bis 3, dadurch gekennzeichnet, daß die Hilfselektrode (14) einen konzentrisch zur Längsachse des Kanals (6) angeordneten Ringkörper aufweist, der über einen elektrisch leitenden Träger (12, 13) an der Außenmantelfläche der Kontaktbuchse (5) festgelegt ist.

5. Steckerbuchse nach Anspruch 4, dadurch gekennzeichnet, daß der Träger (12, 13) einzelne Arme (13) aufweist, die sich vom Ringkörper der Hilfselektrode (14) zu einer auf der Kontaktbuchse (15) angeordneten Hülse (12) erstreckt.

6. Steckerbuchse nach einem der Ansprüche 1 bis 5, dadurch gekennzeichnet, daß die Hilfselektrode (14) in der das sich an die Kontaktbuchse (5) anschließende Ende des Kanals (6) umgebenden Zone angeordnet ist.

7. Steckerbuchse nach einem der Ansprüche 1 bis 6, dadurch gekennzeichnet, daß die Elektrode (15) näher an der Hilfselektrode (14) als an derjenigen Stirnfläche (3) des Isolierkörpers (1) liegt, in welche der Kanal (6) mündet.

8. Steckerbuchse nach einem der Ansprüche 1 bis 7, dadurch gekennzeichnet, daß die Elektrode (15) zumindest auf der der Hilfselektrode (14) zugekehrten Seite eine Isolierung (16) aufweist, die einerseits an der Elektrode (15) und andererseits an dem den Isolierkörper (1) bildenden Material anliegt.

9. Steckerbuchse nach Anspruch 8, dadurch gekennzeichnet, daß die Elektrode (15) vollständig in die Isolierung (16) eingebettet ist, die ihrerseits vollständig in das Material des Isolierkörpers (1) eingebettet ist.

10. Steckerbuchse nach Anspruch 8 oder 9, dadurch gekennzeichnet, daß sowohl der Isolierkörper (1) als auch die Isolierung (16) aus Gießharz bestehen.

11. Steckerbuchse nach einem der Ansprüche 8 bis 10, dadurch gekennzeichnet, daß die Isolierung (16) wenigstens eine Befestigungsstelle (16') für einen sie während des Einbettens in das Material des Isolierkörpers (1) positionierenden Halter (9) aufweist.

12. Steckerbuchse nach einem der Ansprüche 1 bis 11, dadurch gekennzeichnet, daß die Elektrode (15) mit einer Steckbuchse (18) für die Aufnahme eines Steckers (22) zur Verbindung mit einer Verbindungsleitung (23) versehen ist.
